# EUROPÄISCHE PATENTSCHRIFT

(11) **EP 0 456 187 B1**
(45) Veröffentlichungstag und Bekanntmachung des Hinweises auf die Patenterteilung: **22.09.1993**
(21) Anmeldenummer: 91107404.5
(22) Anmeldetag: 07.05.1991
(51) Int. Cl.: F16B 5/06, F16B 21/06, F16B 21/09, B60R 13/02

(54) **Verbindung zwischen einem Träger und einem Plattenelement**
Joint between a support and a panel
Joint entre un support et un panneau

(30) Priorität: 07.05.1990 DE 4014589
(43) Veröffentlichungstag der Anmeldung: 13.11.1991
(73) Patentinhaber: TRW United-Carr GmbH & Co. KG, D-67677 Enkenbach-Alsenborn (DE)
(72) Erfinder: Kraus, Willibald, W-6718 Grünstadt (DE)
(74) Vertreter: Schieschke, Klaus, Dipl.-Ing.

(56) Entgegenhaltungen:
- EP-A- 0 020 308
- EP-A- 0 145 238
- DE-A- 2 216 109
- DE-U- 8 911 881
- US-A- 4 861 208

## Beschreibung

Die Erfindung bezieht sich auf eine Verbindung zwischen einem Träger, insbesondere einem Karosserieteil eines Kraftfahrzeuges und einem Plattenelement, insbesondere einer Wandverkleidung, bestehend aus einem an dem Plattenelement befestigten Oberteil und einem mit diesem verbundenen, mit einem Kopfteil und einem Halsteil versehenen Halteelement aus Kunststoff, welches in eine Öffnung des Trägers eingesetzt ist.

Als Stand der Technik, von dem die vorliegende Erfindung ausgeht, ist eine derartige Verbindung bekannt, bei welcher das Halteelement mit seinem Kopfteil und seinem Halsteil direkt in das Oberteil eingesetzt ist (EP-A-0 020 308). Hierdurch ergibt sich der Nachteil, daß genaue Toleranzen in Abstand zwischen dem Träger und dem Plattenelement eingehalten werden müssen, um eine funktionssichere Verbindung herzustellen. Der Kopfteil des Halteelements muß in exaktem Abstand in das Innere des Oberteils eingesetzt werden.

Als Stand der Technik ist weiterhin eine Verbindung bekannt, bei welcher ein in eine Öffnung eines Trägers eingesetztes Halteelement zunächst einstückig mit einem Teil verbunden ist, welches an einem Plattenelement befestigt werden kann (DE 30 29 845 C1). Auch diese bekannte Verbindung ist nur für ganz spezielle Abstände zwischen einem Träger und einem Plattenelement geeignet; müssen größere Toleranzen und Abstände berücksichtigt werden, wie sie beispielsweise zwischen einem Karosserieteil eines Kraftfahrzeuges und einer Wandverkleidung auftreten können, ist auch diese bekannte Verbindung hierfür nicht ohne weiteres anwendbar.

Weitere Verbindungen zwischen einem Träger und einem Plattenelement sind ebenfalls nicht geeignet, bei Auftreten von größeren Toleranzbereichen eingesetzt zu werden (DE 26 26 140 A1, GB 1 036 423 C1, FR 1 499 495 C1, FR 1 572 541 C1).

Zum Stand der Technik zählt darüber hinaus eine Vorrichtung zum Einstellen eines ersten Bauteils relativ zu einem zweiten Bauteil (DE 33 04 569 C1). Hier findet ein Käfig Anwendung, in welchem ein Stellbock eingesetzt ist, der über Verzahnungen mit entsprechenden Gegenverzahnungen im Käfig zusammenwirken kann. Damit ist eine Einstellung in drei Richtungen über die zwei vorgenannten Bauteile möglich.

Bei dieser bekannten Konstruktion ist jedoch zwingend ein Schraubelement erforderlich, um nach der entsprechenden Einstellung die funktionsgerechte Verspannung der einzelnen Teile zueinander zu bewirken. Es ergibt sich damit ein eingeschränkter Anwendungsbereich, wobei auch eine entsprechende Zugänglichkeit zur Handhabung der Schraube gewährleistet sein muß.

Demgegenüber besteht die Aufgabe der vorliegenden Erfindung darin, eine Verbindung nach dem Oberbegriff des Anspruchs 1 so auszubilden, daß auf einfache Weise auch bei größerem Toleranzausgleich eine gute Befestigung eines Plattenelements an einem Träger bei einfacher Montage bzw. Demontage gewährleistet ist.

Diese Aufgabe wird erfindungsgemäß gelöst durch die Merkmale im kennzeichnenden Teil des Anspruchs 1. Hierdurch ergibt sich der Vorteil, daß auch bei Auftreten größerer Toleranzbereiche eine gute Befestigung eines Trägers an einem Plattenelement gewährleistet ist.

Diese Toleranzen können sowohl im Abstand der beiden Teile voneinander als auch in einer Querebene bezüglich des in die Öffnung einsetzbaren Halteelements bestehen. Die Verbindung eines Plattenelements mit dem Träger erfolgt schnell und bedarf keiner besonderen Werkzeuge, wobei andererseits auch eine einfache Demontage gewährleistet ist. Die erfindungsgemäße Verbindung ist damit besonders vorteilhaft bei der Anbringung einer Wandverkleidung an einem Karosserieteil eines Kraftfahrzeuges anwendbar.

Zum Einclipen des oberen Teils des Mittelteils in das Oberteil kann das Mittelteil erfindungsgemäß einen Kugelabschnitt aufweisen, welcher in eine mit einem Gegenprofil versehene Öffnung des Oberteils einsetzbar ist. Hierbei kann der Kugelabschnitt des Mittelteils oberseitig mehrere, gleichmäßig über den Umfang verteilte, konisch zulaufende Stege aufweisen, wobei darüber hinaus der Kugelabschnitt unterseitig mehrere, ebenfalls konisch zulaufende Stege besitzen kann, welche im Bereich unterhalb des Kugelabschnittes parallel verlaufen. Es ergibt sich damit eine Materialeinsparung bei stabiler Ausbildung des Kugelabschnittes.

Das Mittelteil weist darüber hinaus im unteren Bereich eine mit einer Öffnung versehene Tasche auf, welche mit einer federnden Einschubzone ausgestattet ist. Damit läßt sich das Halteelement seitlich in die Tasche einschieben, wobei vorzugsweise die Abmessungen zwischen einem Kopfteil des Halteelements und der Tasche des Mittelteils so gestaltet sind, daß eine Verschiebung der beiden Teile gegeneinander ermöglicht wird. Auch hierdurch ist vorteilhafterweise ein guter Toleranzausgleich gewährleistet.

In weiterer Ausgestaltung der Erfindung kann die Einschubzone in zwei Ebenen einen konisch zulaufenden Eintrittsbereich aufweisen, wobei angrenzende Flanschteile der Tasche jeweils mit einer Ausnehmung versehen sind. Hierdurch ergibt sich eine Montageerleichterung beim Einschieben des Kopfteils des Halteelements in die Tasche des Mittelteils, wobei außerdem eine Verliersicherung (Transportsicherung) gewährleistet ist, da die Einschubzone federnd ausgebildet ist.

Nach einem weiteren Merkmal der Erfindung kann das Oberteil eine mit dem Plattenelement verbindbare Halteplatte aufweisen, an welche ein rohrförmiger Abschnitt mit Öffnung und Gegenprofil für den Kugelabschnitt des Mittelteils angrenzt. Weiterhin kann die Öffnung im rohrförmigen Abschnitt verrippt ausgebildet und dem Gegenprofil eine konische Einlaufzone vorgeordnet sein. Das Oberteil läßt sich über die Halteplatte z.B. durch Kleben oder Schweißen mit dem Plattenelement verbinden.

Die Erfindung wird nachfolgend anhand von in der Zeichnung dargestellten Ausführungsbeispielen näher beschrieben. In der Zeichnung zeigen:
- Fig. 1: einen Schnitt durch das Mittelteil;
- Fig. 2: eine Draufsicht auf das Mittelteil;
- Fig. 3: eine Seitenansicht des Mittelteils;
- Fig. 4: eine Unteransicht des Mittelteils;
- Fig. 5: die erfindungsgemäße Verbindung, bestehend aus Oberteil, Mittelteil und Halteelement;
- Fig. 6: eine seitliche Ansicht des Halteelements;
- Fig. 7: eine andere Ausführungsmöglichkeit des Oberteils.

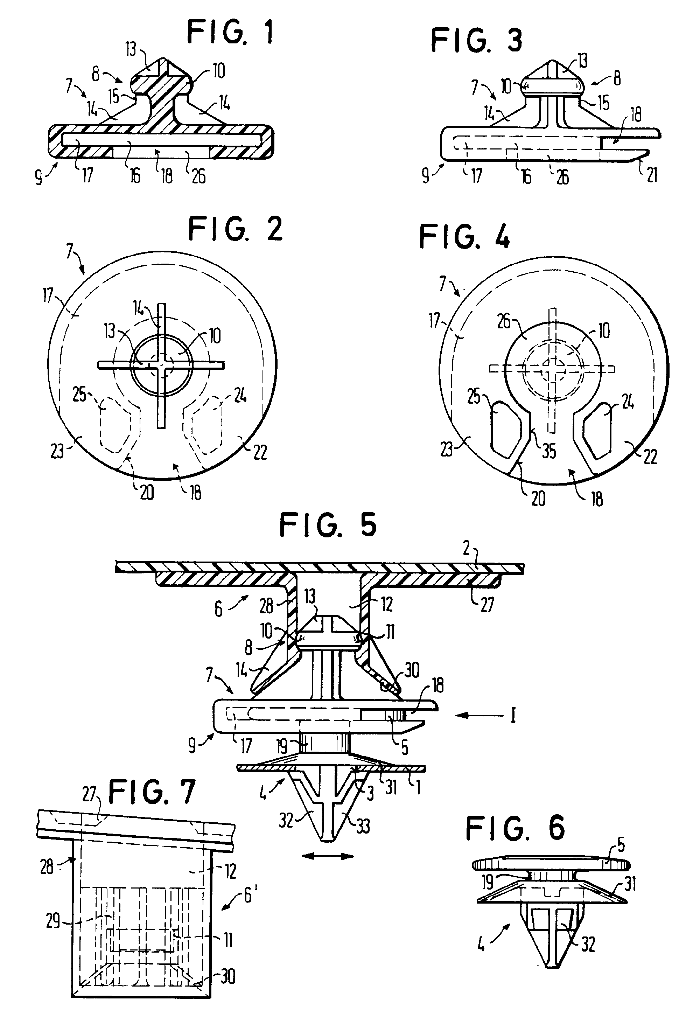

Fig. 5 stellt die erfindungsgemäße Verbindung zwischen einem Träger 1, insbesondere einem Karosserieteil eines Kraftfahrzeuges und einem Plattenelement 2, insbesondere einer Wandverkleidung dar. Hierbei weist der Träger 1 eine Öffnung 3 auf, in welche eine, mit einem Kopfteil 5 versehenes, aus Kunststoff bestehendes Halteelement 4 einsetzbar ist.

An dem Plattenelement 2 ist das Oberteil 6 entweder durch Kleben oder Schweißen angebracht. Zwischen diesem, am Plattenelement 2 befestigbaren Oberteil 6 und dem Halteelement 4 ist erfindungsgemäß ein Mittelteil 7 angeordnet. Hierbei ist ein oberer Bereich 8 des Mittelteils 7 in das Oberteil 6 eingeclipt, wobei ein unterer Bereich 9 des Mittelteils 7 zum seitlichen Einschub des Kopfteils 5 des Halteelements 4 ausgebildet ist.

Das Mittelteil 7 der erfindungsgemäßen Verbindung ist in den Figuren 1 bis 4 näher dargestellt. Wie ersichtlich, weist das Mittelteil 7 im oberen Bereich 8 einen Kugelabschnitt 10 nach Fig. 1 und 3 auf, welcher oberseitig mehrere, gleichmäßig über den Umfang verteilte, konisch zulaufende Stege 13 besitzt. Unterseitig sind ebenfalls mehrere, gleichmäßig über den Umfang verteilte, konisch zulaufende Stege 14 vorgesehen, welche im Bereich 15 unterhalb des Kugelabschnittes 10 zunächst parallel verlaufen, dann jedoch in konische Form nach Fig. 1 bis 3 übergehen. Die oberseitigen und unterseitigen Stege 13 bzw. 14 weisen gleiche Dicke auf.

Der untere Bereich 9 des Mittelteils 7 ist als Tasche 17 ausgebildet und weist eine Öffnung 16 sowie eine federnde Einschubzone 18 nach Fig. 2 und 4 auf.

Die Dimensionierung ist hierbei so, daß zunächst die Breite der Einschubzone 18 in der Tasche 17 kleiner als ein unterhalb des Kopfteils 5 angrenzender Halsteil 19 des Halteelements 4 (sh. Fig. 6) ist. An diese konische Zone schließen parallellaufende Flächen 35 an, deren Abstand voneinander kleiner ist als der Durchmesser des Halsteils 19. Hierdurch ist die vorher erwähnte Transport- bzw. Verliersicherung gewährleistet. Darüber hinaus ist die Öffnung 16 der Tasche 17 größer als der Durchmesser des Kopfteils 5 des Halteelements.

Damit besteht die Möglichkeit, nach Fig. 5 das Halteelement 4 in Pfeilrichtung nach links oder nach rechts zu verschieben, so daß bezüglich der Öffnung 3 des Trägers 1 ein großer Toleranzausgleich gegeben ist. Ein weiterer Toleranzausgleich besteht darin, daß nach den Figuren 1 bis 4 die Tasche 17 des Mittelteils 7 hinter der Einschubzone 18 eine Ausnehmung 26 in Form eines Kreisausschnittes aufweist, welche im Durchmesser größer als der Durchmesser des Halteteils 19 des Halteelements ist. Die Einschubzone 18 weist in zwei Ebenen nach Fig. 2 und 3 einen konisch zulaufenden Eintrittsbereich 20 bzw. 21 auf.

Aus Fig. 2 ist ersichtlich, daß an den Eintrittsbereich 20 der Einschubzone 18 Flanschteile 22 und 23 angrenzen, welche jeweils mit einer Ausnehmung 24 bzw. 25 versehen sind. Wird nun ein in Fig. 6 dargestelltes Halteelement mit seinem Kopfteil 5 in die Tasche 17 des Mittelteils 7 eingeschoben, so federt der Eintrittsbereich 20 infolge der Ausnehmungen 24 und 25, so daß eine leichte und schnelle Montage gewährleistet ist.

Aus Fig. 3 ist der andere Eintrittsbereich 21 erkennbar, welcher ebenfalls konisch ausgebildet ist, so daß sich insgesamt eine schnelle und problemlose Montage ergibt.

Aus Fig. 4 ist ersichtlich, daß die Tasche 17 hinter der Einschubzone 18 einer Ausnehmung 26 in Form eines Kreisabschnittes aufweist, welche im Durchmesser größer als der Durchmesser des in Fig. 6 dargestellten Halsteils 19 des Halteelements 4 ist. Auch hierdurch ist nach Einsetzen des Halteelements 4 in den Mittelteil 7 ein Toleranzausgleich gewährleistet, da das Halteelement innerhalb des Mittelteils 7 in jeder Richtung seitlich verschoben werden kann.

Das in Fig. 6 dargestellte Halteelement 4, bestehend aus dem Kopfteil 5, einer Dichtlippe 31 und einander gegenüberliegenden Federfingern 32 und 33 ist bekannter Stand der Technik (DE-GM 89 11 881.2).

Das in Fig. 5 schematisch dargestellte Oberteil 6 besteht im wesentlichen aus einer Halteplatte 27, welche beispielsweise durch Kleben oder Schweißen mit dem Plattenelement 2 verbindbar ist sowie einem rohrförmigen Abschnitt 28 mit Öffnung 12 und Gegenprofil 11 zur Aufnahme des Kugelabschnitts 10 des Mittelteils 7.

In Fig. 7 ist als Abwandlung ein Oberteil 6' dargestellt, bei welchem die Halteplatte 27 z.B. schräg zur Längsachse des rohrförmigen Abschnitts 28 verläuft und bei welcher außerdem die Öffnung 12 im rohrförmigen Abschnitt 28 mit Rippen 29 versehen sind, welche sich längs der Öffnung 12 erstrecken. Es besteht auch die Möglichkeit, die Halteplatte 27 konvex bzw. konkav auszubilden oder an eine entsprechende Kontur anzupassen.

Bei der Ausführungsform nach Fig. 5 sowie nach Fig. 7 weist das Oberteil 6 bzw. 6' jeweils eine dem Gegenprofil 11 im rohrförmigen Abschnitt 28 vorgeordnete konische Einlaufzone 30 auf, um den Einschub des Kugelabschnittes 10 des Mittelteils 7 in das Oberteil 6 bzw. 6' zu erleichtern, bzw. bei Mittenversatz den Einschub zu zentrieren.

Da der Kugelabschnitt 10 des Mittelteils 7 in dem Gegenprofil 11 im rohrförmigen Abschnitt 28 des Oberteils 6 bzw. 6' eingelagert ist, ergibt sich eine sichere Verbindung zwischen dem Mittelteil 7 und dem Oberteil 6 bzw. 6'.

Durch den seitlichen Einschub in Pfeilrichtung I nach Fig. 6, wodurch das Kopfteil 5 des Halteelements 4 in die Tasche 17 des Mittelteils 7 im unteren Bereich 9 eingeschoben wird, ist darüber hinaus eine sichere Befestigung zwischen dem Mittelteil 7 einerseits und dem Halteelement 4 andererseits gewährleistet. Trotzdem ist eine seitliche Verschiebung zwischen beiden Teilen in jeder Richtung möglich, da das Kopfteil 5 des Halteelements 4 dimensionierungsmäßig kleiner ausgebildet ist, als die entsprechende Öffnung 16 der Tasche 17 des Mittels 7.

Je nach dem, wie lang der rohrförmige Abschnitt 28 des Oberteils 6 bemessen ist, lassen sich Abstände zwischen dem Träger 1 und dem Plattenelement 2 durch die erfindungsgemäße Verbindung, bestehend aus dem Halteelement 4, dem Mittelteil 7 sowie dem Oberteil 6 überwinden. Damit ist auch bezüglich des Abstandes zwischen dem Träger 1 und dem Plattenelement 2 ein weiter Toleranzausgleich gewährleistet, wie er z.B. unter Temperatureinwirkung auftreten kann. Darüber hinaus kann beispielsweise das Plattenelement 2 in beliebiger Weise verlaufen, wobei ein Ausgleich gemäß Fig. 7 durch die an die entsprechende Kontur angepaßte Platte 27 gewährleistet ist.

## Patentansprüche

1. Verbindung zwischen einem Träger, insbesondere einem Karosserieteil eines Kraftfahrzeuges und einem Plattenelement, insbesondere einer Wandverkleidung, bestehend aus einem an dem Plattenelement befestigten Oberteil und einem mit diesem verbundenen, mit einem Kopfteil und einem Halsteil versehenen Halteelement aus Kunststoff, welches in eine Öffnung des Trägers eingesetzt ist,
dadurch gekennzeichnet,
daß zwischen dem Oberteil (6) und dem Halteelement (4) ein Mittelteil (7) angeordnet ist,
daß ein oberer Bereich (8) des Mittelteils (7) in das Oberteil (6; 6') einclipbar und ein unterer Bereich (9) des Mittelteils (7) zum seitlichen Einschub des Kopfteiles (5) des Halteelements (4) ausgebildet ist,
daß das Halsteil (19) des Halteelements (4) in der Einschubebene mit allseitigem Spiel in einer Tasche (17) des Mittelteils (7) aufgenommen ist und
daß die Länge eines rohrförmigen Abschnitts (28) des Oberteils (6; 6') an die Abstände zwischen dem Träger (1) und dem Plattenelement (2) angepaßt ist.

2. Verbindung nach Anspruch 1, dadurch gekennzeichnet, daß das Mittelteil (7) im oberen Bereich (8) einen Kugelabschnitt (10) aufweist, welcher in eine mit einem Gegenprofil (11) versehene Öffnung (12) des Oberteils (6, 6') einclipbar ist.

3. Verbindung nach Anspruch 2, dadurch gekennzeichnet, daß der Kugelabschnitt (10) oberseitig mehrere, gleichmäßig über den Umfang verteilte, konisch zulaufende Stege (13) aufweist.

4. Verbindung nach Anspruch 2 und 3, dadurch gekennzeichnet, daß der Kugelabschnitt (10) unterseitig mehrere, gleichmäßig über den Umfang verteilte, konisch zulaufende Stege (14) aufweist, welche im Bereich unterhalb des Kugelabschnittes (10) parallel verlaufen.

5. Verbindung nach Anspruch 2 und 3, dadurch gekennzeichnet, daß die unterseitigen und oberseitigen Stege (13, 14) gleiche Dicke aufweisen.

6. Verbindung nach Anspruch 1, dadurch gekennzeichnet, daß der untere Bereich (9) des Mittelteils (7) die mit einer Öffnung (16) versehene Tasche (17) mit einer federnden Einschubzone (18) bildet.

7. Verbindung nach Anspruch 6, dadurch gekennzeichnet, daß die Breite der Einschubzone (18) in der Tasche (17) kleiner als das unterhalb des Kopfteils (5) angrenzende Halsteil (19) des Halteelements (4).

8. Verbindung nach Anspruch 7, dadurch gekennzeichnet, daß die Tasche (17) hinter der Einschubzone (18) eine Ausnehmung (26) in Form eines Kreisausschnittes aufweist, welche im Durchmesser größer als der Durchmesser des Halsteils (19) des Halteelements (4) ist.

9. Verbindung nach einem der vorhergehenden Ansprüche, dadurch gekennzeichnet, daß das Oberteil (6; 6') eine mit dem Plattenelement (2) verbindbare Halteplatte (27) aufweist, an welcher ein rohrförmiger Abschnitt (28) mit Öffnung (12) und Gegenprofil (11) für den Kugelabschnitt (10) des Mittelteils (7) angrenzt.

10. Verbindung nach Anspruch 9, dadurch gekennzeichnet, daß die Öffnung (12) im rohrförmigen Abschnitt (28) verrippt ausgebildet ist.

11. Verbindung nach Anspruch 9 und 10, dadurch gekennzeichnet, daß dem Gegenprofil (11) im rohrförmigen Abschnitt (28) eine konische Einlaufzone (30) vorgeordnet ist.

12. Verbindung nach Anspruch 9 und 10, dadurch gekennzeichnet, daß das Oberteil (6; 6') über die Halteplatte (27) durch Kleben oder Schweißen mit dem Plattenelement (2) verbunden ist.

## Claims

1. Connection between a support, in particular a body part of a motor vehicle, and a plate element, in particular a wall panel, comprising a top part fastened to the plate element and a plastics holding element connected thereto, provided with a head part and a neck part, which holding element is inserted into an opening in the support, characterised in that a centre part (7) is disposed between the top part (6) and the holding element (4), in that an upper region (8) of the centre part (7) can be clipped into the top part (6; 6') and a lower region (9) of the centre part (7) is configured to allow the lateral insertion of the head part (5) of the holding element (4), in that the neck part (19) of the holding element (4) is received with all-round play, in the plane of insertion, in a pocket (17) of the centre part (7) and in that the length of a tubular section (28) of the top part (6; 6') is matched to the distances between the support (1) and the plate element (2).

2. Connection according to Claim 1, characterised in that the centre part (7) exhibits, in the upper region (8), a spherical section (10), which can be clipped into an opening (12), provided with a counter-profile (11), in the top part (6, 6').

3. Connection according to Claim 2, characterised in that the spherical section (10) exhibits, on the top side, a plurality of crosspieces (13), which are distributed uniformly over the periphery and are conically tapered.

4. Connection according to Claims 2 and 3, characterised in that the spherical section (10) exhibits, on the bottom side, a plurality of crosspieces (14), which are distributed uniformly over the periphery and are conically tapered and which run parallel in the region beneath the spherical section (10).

5. Connection according to Claims 2 and 3, characterised in that the crosspieces (13, 14) on the bottom side and on the top side exhibit equal thickness.

6. Connection according to Claim 1, characterised in that the lower region (9) of the centre part (7) forms, with a resilient insertion zone (18), the pocket (17) provided with an opening (16).

7. Connection according to Claim 6, characterised in that the width of the insertion zone (18) in the pocket (17) is smaller than the neck part (19), adjoining beneath the head part (5), of the holding element (4).

8. Connection according to Claim 7, characterised in that the pocket (17) exhibits, behind the insertion zone (18), a recess (26) in the form of a circular cut-out, which recess is larger in diameter than the diameter of the neck part (19) of the holding element (4).

9. Connection according to one of the preceding claims, characterised in that the top part (6; 6') exhibits a holding plate (27) which can be connected to the plate element (2) and which is adjoined by a tubular section (28) having an opening (12) and having a counter-profile (11) for the spherical section (10) of the centre part (7).

10. Connection according to Claim 9, characterised in that the opening (12) in the tubular section (28) is of ribbed configuration.

11. Connection according to Claims 9 and 10, characterised in that a conical admission zone (30) is disposed in front of the counter-profile (11) in the tubular section (28).

12. Connection according to Claims 9 and 10, characterised in that the top part (6; 6') is connected via the holding plate (27) to the plate element (2) by gluing or welding.

## Revendications

1. Liaison entre un support, notamment une partie de carrosserie de véhicule automobile et un élément de panneau, notamment un panneau d'habillage, constituée par une partie supérieure fixée sur l'élément de panneau et un élément de retenue en matière synthétique relié avec celle-ci et munie d'une partie de tête et d'une partie de col, élément de retenue qui est incoporé dans une ouveture du support,
caractérisée en ce que
entre la partie supérieure (6) et l'élément de retenue (4) est agencée une partie médiane (7),
en ce que une zone supérieure (8) de la partie médiane (7) est enclipsable dans la partie supérieure (6 ; 6') et une zone inférieure (9) de la partie médiane (7) est conçue pour l'introduction latérale de la partie de tête (5) de l'élément de retenue (4),
en ce que la partie de col (19) de l'élément de retenue (4) est logée dans le plan d'introduction avec un jeu sur tous les côtés dans un compartiment (17) de la partie médiane (7), et
en ce que la longueur d'une section tubulaire (28) de la partie supérieure (6 ; 6') est adaptée aux espacements entre le support (1) et l'élément de panneau (2).

2. Liaison selon la revendication 1, caractérisée en ce que la partie médiane (7) présente dans la zone supérieure (8) une section sphérique (10) qui est enclipsable dans une ouverture (12) munie d'un contre-profil (11), de la partie supérieure (6, 6').

3. Liaison selon la revendication 2, caractérisée en ce que la section sphérique (10) présente sur le côté supérieur plusieurs entretoises (13) de configuration conique, réparties uniformément sur la périphérie.

4. Liaison selon les revendications 2 et 3, caractérisée en ce que la section sphérique (10) comporte sur le côté inférieur plusieurs entretoises (14) de configuration conique, réparties uniformément sur la périphérie et qui s'étendent parallèlement dans la zone au-dessous de la section sphérique (10).

5. Liaison selon les revendications 2 et 3, caractérisée en ce que les entretoises inférieures et supérieures (13, 14) présentent la même épaisseur.

6. Liaison selon la revendication 1, caractérisée en ce que la zone inférieure (9) de la partie médiane (7) forme le compartiment (17) muni d'une ouverture (16) avec une zone d'introduction élastique (18).

7. Liaison selon la revendication 8, caractérisée en ce que la largeur de la zone d'introduction (18) dans le compartiment (17) est plus petite que la partie de col (19) limitrophe au-dessous de la partie de tête (5), de l'élément de retenue (4).

8. Liaison selon la revendication 7, caractérisée en ce que le compartiment (17) présente derrière la zone d'introduction (18) un évidement (28) sous forme d'une section circulaire, dont le diamètre est plus grand que le diamètre de la partie de col (19) de l'élément de retenue (4).

9. Liaison selon l'une des revendications précédentes, caractérisée en ce que la partie supérieure (6 ; 6') présente une plaque de retenue (27) pouvant être raccordée à l'élément de panneau (2), plaque de retenue sur laquelle est limitrophe une section tubulaire (28) avec une ouverture (12) et un contre-profil (11) pour la section sphérique (10) de la partie médiane (7).

10. Liaison selon la revendication 9, caractérisée en ce que l'ouverture (12) présente une configuration nervurée dans la section tubulaire (28).

11. Liaison selon les revendications 9 et 10, caractérisée en ce que une zone d'entrée conique (30) est pré-affectée au contre-profil (11) dans la section tubulaire (28).

12. Liaison selon les revendications 9 et 10, caractérisée en ce que la partie supérieure (6 ; 6') est reliée par l'intermédiaire de la plaque de retenue (27) par collage ou soudage à l'élément de panneau (2).
